## Europäisches Patentamt
## European Patent Office
## Office européen des brevets

(19)

(11) Veröffentlichungsnummer : **0 088 238**
**B1**

(12)

# EUROPÄISCHE PATENTSCHRIFT

(45) Veröffentlichungstag der Patentschrift :
**18.06.86**

(51) Int. Cl.⁴ : **A 21 B   1/48**, B 65 G  15/42

(21) Anmeldenummer : **83101051.7**

(22) Anmeldetag : **04.02.83**

(54) **Vorrichtung zum Transport von Teigstücken durch eine Gärkammer und/oder einen Backofen.**

(30) Priorität : **08.03.82 SE 8201409**

(43) Veröffentlichungstag der Anmeldung :
**14.09.83 Patentblatt 83/37**

(45) Bekanntmachung des Hinweises auf die Patenterteilung : **18.06.86 Patentblatt 86/25**

(84) Benannte Vertragsstaaten :
**AT BE CH DE FR GB IT LI NL**

(56) Entgegenhaltungen :
DE-B- 1 070 992
FR-A- 2 385 616
FR-A- 2 423 419
GB-A- 1 362 884
US-A- 2 987 169
US-A- 3 788 799

(73) Patentinhaber : **Austria Metall Aktiengesellschaft**

**A-5282 Braunau am Inn (AT)**

(72) Erfinder : **Andersson, Kurt Göte Ingvar**
**Hamngatan 37**
**S-232 00 Arlöv (SE)**

(74) Vertreter : **Hain, Leonhard, Dipl.-Ing.**
**Tal 18/IV**
**D-8000 München 2 (DE)**

**Beschreibung**

Die Erfindung betrifft eine Vorrichtung zum Transport von Teigstücken durch eine Gärkammer und/oder einen Backofen gemäß dem Oberbegriff des Patentanspruches 1.

Vorrichtungen dieser Art werden in Bäckereien benützt, um Teigstücke durch verschiedene Behandlungsstationen, wie z. B. eine Gärkammer und/oder eine Backofenanlage, zu führen. Ein endloses Transportband läuft dazu um Umlenkwalzen um. Bei einem bekannten Transportband dieser Art (US-A-3 788 799) sind zur Begrenzung der darauf zu transportierenden Teigstücke Stützleisten an den Seitenrändern, beispielsweise durch Ankleben, befestigt. Diese Stützleisten sind wärmebeständig und elastisch, zweckmäßig bestehen sie aus Silikongummi. Die bekannten Stützleisten weisen die Querschnittsform eines Viertelkreis-Sektors auf, wodurch ihre Höhe begrenzt ist. Derart niedrige Stützleisten sind zwar für einen Umlauf um Umlenkwalzen ausreichend elastisch und verformbar, jedoch können damit auch nur verhältnismäßig niedrige Teigstücke transportiert werden. Bei angeklebten oder anvulkanisierten Stützleisten besteht zudem die Gefahr, daß sie sich unter dem Einfluß der beim Umlauf auftretenden Verformungsspannungen schon bald vom Transportband lösen.

Der Erfindung liegt daher die Aufgabe zugrunde, eine Vorrichtung zum Transport von Teigstücken zu schaffen, bei der das Transportband mit verhältnismäßig hohen und darauf dauerhaft befestigten Stützleisten ausgerüstet ist.

Diese Aufgabe wird an einer Vorrichtung gemäß dem Oberbegriff des Patentanspruches 1 erfindungsgemäß durch die kennzeichnenden Merkmale dieses Patentanspruches gelöst.

Weitere Merkmale der Erfindung sind in Unteransprüchen beansprucht.

Durch die Ausbildung einer längslaufenden Ausnehmung in der Außenwand der Stützleisten ist es möglich, auch hohe Stützleisten auf einem umlaufenden Transportband vorzusehen. Diese Ausnehmungen bilden eine vorbestimmte Knickstelle und der äußere Abschnitt der Stützleisten kann sich nach außen umlegen, wodurch die Zugspannungen in diesem Außenbereich vermindert werden. Gerade die stellenweise Befestigung mittels Befestigungselementen erweist sich in Verbindung mit derart ausgebildeten Stützleisten als besonders vorteilhaft, weil sich hierdurch sowohl das Transportband als auch die Stützleisten unabhängig voneinander besser den Umlenkbewegungen anpassen können. Zudem stabilisieren die zum Teil die Stützleisten durchdringenden Befestigungselemente die Stützleisten im Bodenabschnitt, mit der Folge, daß die Wandstärke der Stützleisten wiederum verringert und dadurch auch ihre Umbiegbarkeit nach außen begünstigt wird. Eine längslaufende Ausnehmung vereinfacht und erleichtert schließlich noch die Unterbringung der Befestigungselemente.

Die Erfindung wird nachfolgend anhand eines Ausführungsbeispiels, das auch in der Zeichnung dargestellt ist, näher beschrieben. Es zeigen :

Figur 1 eine Ansicht einer schematisierten Anlage,

Figur 2 eine Seitenansicht eines Transportbandabschnittes und

Figur 3 einen Schnitt nach der Linie 3-3 der Fig. 2.

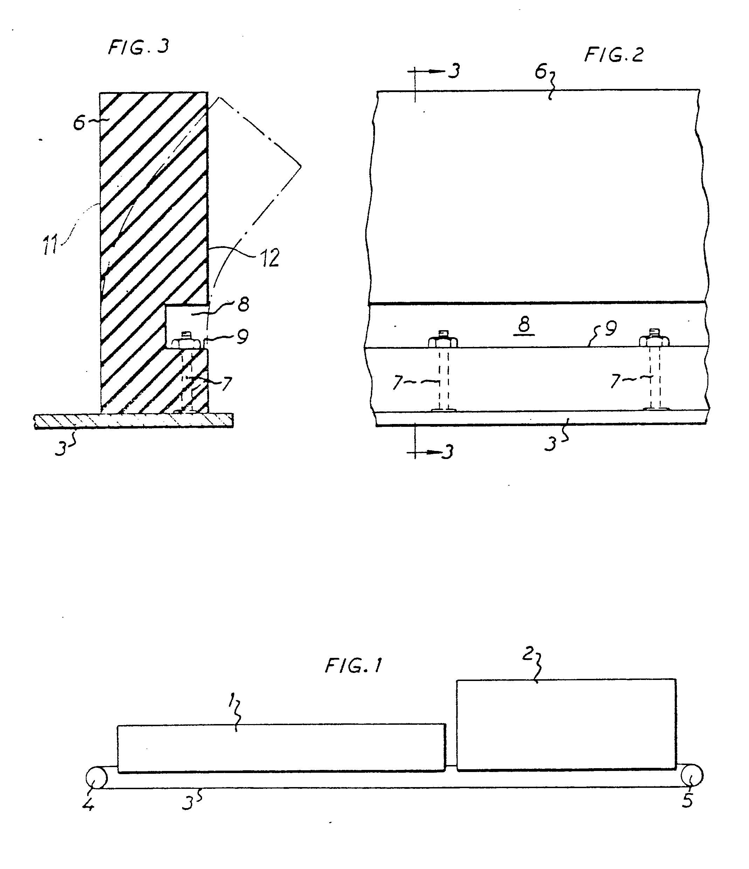

Die in Fig. 1 gezeigte Anlage besteht aus einer Gärkammer 1 und einem Backofen 2, durch welche die Teigstücke (nicht gezeichnet) mittels eines endlosen Transportbandes 3 transportiert werden, das aus einem homogenen Band aus Kohlenstoffstahl besteht. Dieses Transportband 3 läuft auf der Einlaufseite über eine Umlenkwalze 4 und auf der Auslaufseite der Anlage über eine Umlenkwalze 5 um. In der Gärkammer 1 und im Backofen 2 bewegt es sich über ein Gleitbett aus Gußeisen.

Das Transportband 3 weist an jedem Seitenrand eine längslaufende Stützleiste 6 für die Seitenabstützung der auf dem Transportband angeordneten Teigstücke auf (Fig. 2 und 3). Diese Stützleisten 6, die aus Silikongummi (TXSIS-162680, Material 68601) hergestellt sind, erstrecken sich längs des ganzen Transportbandes 3 und sind mit diesem mittels mehrerer Befestigungselemente 7, die auf dem Transportband 3 befestigt sind, fest verbunden.

Jede Stützleiste 6 weist in ihrer Außenwand 12 eine längslaufende Ausnehmung oder Nut 8 auf, welche sich längs der gesamten Stützleiste erstreckt. Diese Ausnehmung 8 reduziert die Beanspruchung, welcher die Stützleiste 6 beim Umlaufen um die Umlenkwalzen 4 und 5 ausgesetzt ist. Wenn das Transportband 3 also über die Walzen 4 und 5 läuft, biegt sich jede Stützleiste 6 dank der Ausnehmung 8 etwas nach außen auf die Seite, wie mit strichlierten Linien in Fig. 3 angedeutet ist. Dadurch wird die Streckung der Stützleisten 6 in radialer Richtung der Umlenkwalze im äußeren Abschnitt reduziert.

Die Ausnehmung 8, welche jede geeignete Form haben kann, hat in dem gezeigten Ausführungsbeispiel U-förmigen Querschnitt und ist auf der dem Transportband 3 zugekehrten Seite durch eine zu diesem parallele Bodenfläche 9 begrenzt. Jedes Befestigungselement 7 besteht im gezeigten Ausführungsbeispiel aus einem Schraubenbolzen, dessen Kopf fest mit dem Transportband 3 durch eine Kontaktschweissung verbunden ist und dessen Schaft sich durch die Stützleiste 6 bis in die Ausnehmung 8 erstreckt, wo eine Mutter, eventuell unter Zwischenlage einer Beilagscheibe, damit verschraubt ist.

**Patentansprüche**

1. Vorrichtung zum Transport von Teigstücken durch eine Gärkammer und/oder einen Backofen, mit einem endlosen Transportband (3), das zur Seitenbegrenzung der daraufliegenden Teigstücke längslaufende Stützleisten (6) aus elastischem Werkstoff, wie Silikongummi, aufweist und die Innenwände (11) dieser an ihren Basisflächen auf dem Transportband (3) befestigten Stützleisten senkrecht vom Transportband hochstehen, dadurch gekennzeichnet, daß die Stützleisten (6) in ihren Außenwänden (12) im Abstand vom Transportband (3) je eine längslaufende Ausnehmung (8) aufweisen und mittels im Abstand angeordneter Befestigungselemente (7) auf dem Transportband befestigt sind, die einerseits am Transportband (3) und andererseits an der dem Transportband zugekehrten Bodenfläche (9) der Ausnehmungen (8) angreifen.

2. Vorrichtung nach Anspruch 1, dadurch gekennzeichnet, daß die Ausnehmungen (8) eine zum Transportband (3) parallele Bodenfläche (9) aufweisen.

3. Vorrichtung nach Anspruch 1 oder 2, dadurch gekennzeichnet, daß die Stützleisten (6) Hochkant-Form aufweisen.

4. Vorrichtung nach einem der Ansprüche 1 bis 3, dadurch gekennzeichnet, daß als Befestigungselemente (7) Schraubenbolzen vorgesehen sind, deren Köpfe am Transportband (3) befestigt sind, deren Schäfte sich durch die Stützleisten (6) bis in die Ausnehmungen (8) hineinerstrecken und deren Muttern auf den Bodenflächen (9) der Ausnehmungen (8) aufliegen.

## Claims

1. Device for conveying pieces of dough through a fermentation chamber and/or a baking oven comprising an endless conveyor belt (3) having, for laterally limiting the pieces of dough placed on it, longitudinal support strips (6) of an elastic material, such as silicone rubber, the inner walls (11) of the support strips, whose base surfaces are fixed to the conveyor belt (3), rising vertically from the conveyor belt, characterized in that each support strip (6) has on its outside (12) at a certain distance from the conveyor belt (3) a longitudinal groove (8) and that they are fixed to the conveyor belt by means of fixing elements (7) being arranged at intervals and engaging on the one hand in the conveyor belt (3) and on the other hand in the ground surface (9), turning towards the conveyor belt, of the grooves (8).

2. Device according to claim 1, characterized in that the grooves (8) have a ground surface (9) running parallel with the conveyor belt (3).

3. Device according to claim 1 or 2, characterized in that the support strips (6) have an upright form.

4. Device according to one of the claims 1 to 3, characterized in that as fixing elements (7) threaded bolts are provided whose heads are secured to the conveyor belt (3), whose stems extend through the support strips (6) into the grooves (8) and whose nuts rest against the ground surfaces (9) of the grooves (8).

## Revendications

1. Dispositif pour transporter des pâtons à travers une chambre de fermentation et/ou un four, comportant une courroie transporteuse (3) sans fin, qui, pour limiter latéralement les pâtons qui se trouvent sur elle, présente des rebords (6) longitudinaux en un matériau élastique, comme du caoutchouc de silicone, les parois internes (11) de ces rebords étant assujetties par leurs surfaces de base à la courroie transporteuse (3) et en faisant verticalement saillie, dispositif caractérisé en ce que les rebords (6) présentent dans leurs parois externes (12), à une certaine distance de la courroie transporteuse (3), chacun un évidement (8) longitudinal et sont assujettis à la bande transporteuse à l'aide d'éléments (7) de fixation disposés par intervalles et qui sont fixés d'une part sur la courroie transporteuse (3) et d'autre part, sur la surface inférieure (9), tournée vers la courroie transporteuse, des évidements (8).

2. Dispositif selon la revendication 1, caractérisé en ce que les évidements (8) présentent une surface inférieure (9) parallèle à la courroie transporteuse (3).

3. Dispositif selon la revendication 1 ou 2, caractérisé en ce que les rebords (6) présentent la forme d'un élément placé sur chant.

4. Dispositif selon l'une des revendications 1 à 3, caractérisé en ce que, à titre d'éléments (7) de fixation sont prévus des boulons filetés dont les têtes sont assujetties à la courroie transporteuse (3), dont les tiges traversent les rebords (6) jusqu'aux évidements (8) et dont les écrous s'appliquent sur les surfaces inférieures (9) des évidements (8).

FIG. 3

FIG.2

FIG. 1